Europäisches Patentamt

(19) European Patent Office

Office européen des brevets

(11) Publication number: **0 095 201**
**B1**

## (12) EUROPEAN PATENT SPECIFICATION

(45) Date of publication of patent specification: **27.08.86**

(51) Int. Cl.⁴: **G 03 B 27/80, G 01 J 1/42**

(21) Application number: **83200667.0**

(22) Date of filing: **11.05.83**

(54) **Reproduction camera.**

(30) Priority: **26.05.82 NL 8202142**
**12.11.82 NL 8204380**

(43) Date of publication of application:
**30.11.83 Bulletin 83/48**

(45) Publication of the grant of the patent:
**27.08.86 Bulletin 86/35**

(84) Designated Contracting States:
**DE FR GB IT NL SE**

(56) References cited:
**CH-A- 541 823**
**GB-A-2 096 336**

(73) Proprietor: **HELIOPRINT A/S**
**16 Munkegaardsvej**
**DK-3490 Kvistgaard (DK)**

(72) Inventor: **Andersen, Steen**
**16 Syrenhaven**
**DK-3450 Allerod (DK)**

(74) Representative: **Carpmael, John William**
**Maurice et al**
**CARPMAELS & RANSFORD 43 Bloomsbury**
**Square**
**London, WC1A 2RA (GB)**

Courier Press, Leamington Spa, England.

## Description

This invention relates to a reproduction camera for the production of contact screen prints from an original, said camera being provided with a platen for a contact screen and a light-sensitive material, an optical system for projecting an image of the original in the plane of the light sensitive material, means for exposing the light-sensitive material and means for controlling the exposure, said exposure controlling means comprising a computer which, after feeding in the minimum and maximum optical density of the original, the optical data of the screen used and the required data of the camera and the film, determines a dosage for an imagewise main exposure through the contact screen, and at least one additional exposure.

In screen photography, an original is reproduced on a graphic film through a contact screen.

The intention is generally to convert continuous tones having a specific optical density on the original into screened halftones having the same optical density on the film. To this end, the halftones on the film are made by means of screen dots of different sizes. There is a fixed relationship between the screen dot size and the average optical density of the area containing the dots. Expressed as a formula:

$$D = \log \frac{1}{1-a} \qquad (1)$$

where D is the optical density and $a$ is the percentage of the area occupied by dots.

The contact screens are used in many versions and differ, for example, in the optical density gradient of one dot. The maximum optical densities of screens may also differ. If the original exhibits a large optical density variation, a contact screen having a high maximum optical density will be used and if the original has a small optical density variation a contact screen having a small maximum optical density will be used.

Every contact screen has a so-called "basic screen range" which indicates the contrast range of the original that can just be reproduced. For example, a standard screen has a basic screen range of 1.1, which means that an original having a contrast range of 1.1 can just be reproduced properly without special provisions having to be made when this screen is used.

It is possible to reproduce originals having a higher contrast range than corresponds to the basic screen range of a screen. A non-imagewise additional exposure through the screen is used for this purpose and is usually in the form of a flash exposure. Here again there is a fixed relationship between the maximum reproducible contrast of an original and the amount of additional exposure when a contact screen with a specific basic screen range $R_o$ is used. Expressed as a formula:

$$R - R_o = -\log \left(1 - \frac{F}{F_o}\right) \qquad (2)$$

where R is the contrast range of an original, F is the required flash exposure and $F_o$ is the basic flash exposure established in a specific system.

Conditions are more difficult if the contrast range of the original is less than the basic screen range of the screen used. Trial and error can be applied to apply, in addition to a main exposure, an imagewise additional exposure to the film without the screen being present. (Bump)

It is also possible to select for each original a contact screen whose basic screen range corresponds to the contrast range of that original. To enable any original to be (properly) reproduced as is desirable, a large number of contact screens are required and the procedure is very time-consuming.

From CH—A—541823 an exposure control device for a reproduction camera is known including a system for measuring the minimum and maximum optical density as well as the density range of an original.

If the density range exceeds the screen range, a flash exposure is added to the main exposure. If the range of the screen used exceeds the density range of the original, a bump exposure is added. In no case more than one additional exposure is used for one original, whether it be a bump exposure or a flash exposure.

The object of the invention is to provide a camera of the kind referred to in which a correct combination of main and additional exposures of reproduction of a specific original in the manner required is always determined without any need for selecting a screen. To this end the reproduction camera according to the invention is characterized in that in order to yield a screen print, of which a specific size of the highlight dots and a specific size of the shadow dots correspond exclusively or substantially exclusively to the minimum and maximum optical density of the original and to obtain a reproduction of an average grey value occuring in the original with any desired dot size, the computer is provided with an adjustable basic screen range regulator for varying the specific main exposure with simultaneous adaption of an imagewise additional exposure without the screen and, if the minimum and maximum optical density cannot or cannot exclusively be reproduced with the specific dot sizes by using the main exposure and the imagewise additional exposure, also of a non-imagewise additional exposure through the contact screen, in order exclusively or substantially exclusively to continue to reproduce the minimum and maximum optical density of the original with the specific dot sizes.

Thereby, it is made possible to make exposures yielding an image with specific screen dot sizes for both the highlight and shadow dots and to reproduce an average grey value occurring in the original with any desired dot size.

Other features and advantages of the invention will become apparent from the following description with reference to the accompanying drawings wherein:

Fig. 1 represents a graph in which the contrast range of an original is identical to the basic screen range of the screen,

Fig. 2 represents a graph in which the contrast range of an original is less than the basic screen range of the screen,

Fig. 3 represents a graph in which the contrast range of an original is greater than the basic screen range of the screen, and

Fig. 4 schematically represents a computer with input and output units.

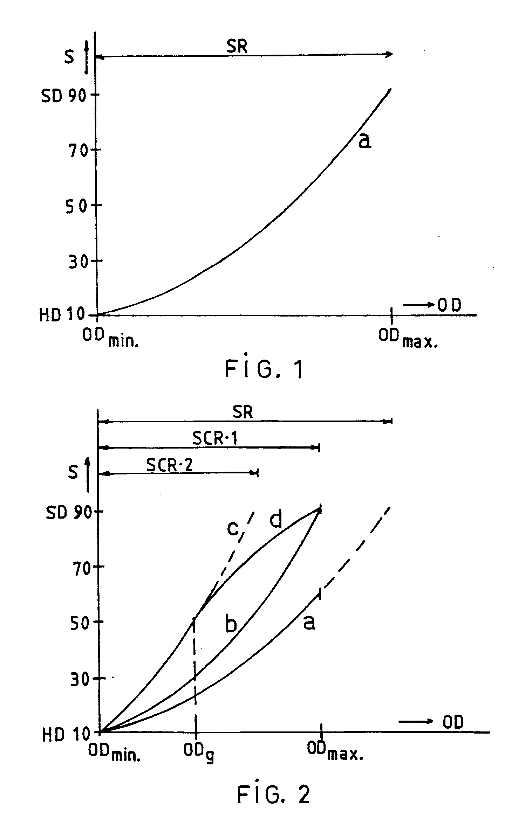

In Figs. 1 to 3 the optical density (OD) of an original is plotted along the horizontal axis. The lightest part of an original that just should be reproduced is indicated by $OD_{min.}$ and the darkest part that should be reproduced by $OD_{max.}$. SR is the basic screen range of the contact screen used. The vertical axis shows the screen dot size (S) as a percentage of the maximum screen dot size. It is generally desirable to reproduce the $OD_{min.}$ of the original using a positive film with a screen dot size of about 10% and the $OD_{max.}$ of the original with a screen dot size of about 90%. This is indicated in the Figures by HD (highlight dots) and SD (shadow dots) respectively. If the contrast range of an original ($OD_{max.} - OD_{min.}$) corresponds to the basic screen range (SR) of the screen used, an imagewise (main) exposure through the screen gives an image having a density gradient as indicated by curve $a$ in Fig. 1. The exposure time for the main exposure depends on a number of constant factors, such as for example imaging ratio, diaphragm, intensity of the light source, and so on. The only variable factor in these conditions is the $OD_{min.}$ of the original in accordance with the equation:

$$T_H = T_{H_0} \cdot 10^{OD_{min.}} \qquad (3)$$

where $T_H$ is the main exposure time and $T_{H_0}$ is the basic main exposure time. If an original having a contrast range less than that corresponding to the basic screen range of the screen must be reproduced, an imagewise main exposure through the screen will yield an image having a density gradient as indicated by curve $a$ in Fig. 2. The darkest parts of the original are here reproduced with a dot size of about 60%, i.e. much too light. By now applying an imagewise additional exposure without a screen an image is obtained having the density gradient indicated by curve $b$. The darkest parts of the original are now reproduced with a screen dot size of 90%. The amount of imagewise additional exposure ($T_B$) without a screen is determined by means of the following formula:

$$T_b = T_{B_0} \cdot 10^{OD_{min.}} \times \left(1 - \frac{10^{(OD_{max.} - OD_{min.})} - 1}{10^{SR} - 1}\right) \qquad (4)$$

where $T_{B_0}$ is the imagewise basic additional exposure time and SR is the basic screen range of the contact screen. The sum of the main exposure and additional exposure must in these conditions remain equal to maintain the correct value for HD associated with $OD_{min.}$.

The density gradient obtained as indicated by curve $b$ is identical to the curve that would be obtained if there were only a main exposure through a screen having a basic screen range SCR-1. By means of an imagewise additional exposure without a screen it is therefore possible to select practically any wanted basic screen range.

In most cases the "wanted basic screen range" corresponds to the contrast range of the original, i.e. $OD_{max.} - OD_{min.}$ (curve $b$ in Fig. 2). Sometimes, however, it is desired to deviate from this. In that case, the "wanted basic screen range" (SCR) must be introduced into formula 4 instead of the factor $OD_{max.} - OD_{min.}$.

The formula for the imagewise additional exposure without a screen thus becomes:

$$T_B = T_{B_0} \cdot 10^{OD_{min.}} \left(1 - \frac{10^{SCR} - 1}{10^{SR} - 1}\right) \qquad (5)$$

Fig. 2 indicates at $OD_g$ the average grey value occurring in the original. If the density gradient on the film is as indicated by curve $b$, the $OD_g$ is reproduced with a dot size of about 30%. However, it is desirable to reproduce the average grey of an original with a dot size of about 48%. If a "wanted basic screen range", SCR-2 is now set and then, in accordance with formula 5, an imagewise additional exposure without a screen is applied, this additional exposure together with the main exposure yields a density gradient on the film as is indicated by curve $c$. This curve corresponds to the curve that would be obtained if there were only a main exposure through a screen having a basic screen range SCR-2. If a non-imagewise additional exposure with a screen is then used, the amount of which is calculated in known manner, the density gradient on the film becomes as indicated by curve $d$. The maximum and minimum optical densities of the original are in this way reproduced on the film with a specific screen dot size for the highlight dots and a specific screen dot size for the shadow dots.

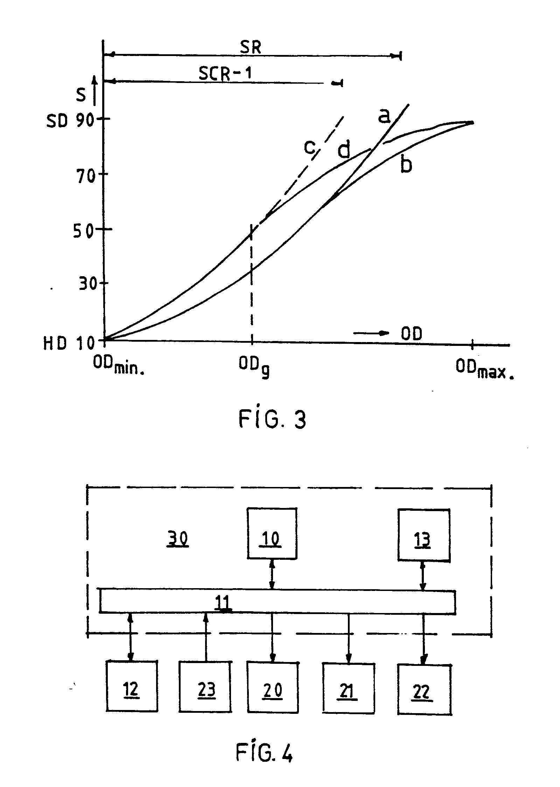

Fig. 3 shows the situation for the case in which the contrast range of the original is greater than the basic screen range of the screen. A main exposure yields an image the density gradient of which is indicated by curve $a$. No contrast difference can be detected now in the shadow dots.

A non-imagewise additional exposure through the screen, calculated in the manner described, yields an image the density gradient of which is indicated by curve $b$. Here too, the maximum and minimum optical densities of the original are reproduced on the film with a specific screen dot size for highlight dots and shadow dots.

If it is desirable to reproduce the mid-tones of the original darker than is the case with curve *b*, an imagewise additional exposure without a screen can again be carried out. To this end, the "wanted basic screen range" SCR-1 is introduced into formula 5. The density gradient obtained on the film by means of this exposure is plotted as curve *c* (Fig. 3). A non-imagewise additional exposure through the screen yields a density gradient as indicated by curve *d*. All these exposures are determined with a computer disposed in the reproduction camera.

Fig. 4 schematically represents the computer 30 with the input and output units. Computer 30 comprises a central processing unit 10 (CPU), a bus system 11 and a memory 13. A control panel 12 is connected to the central processing unit (CPU) 10 via the bus system 11. The computer 30 automatically controls all kinds of functions of the reproduction camera, e.g. the length of times of the main exposure 20, of the imagewise additional exposure without a screen, 21, and the non-imagewise additional exposure with a screen, 22. The data required for this control must be fed in. For example, the aperture of the diaphragm is automatically detected by means of a sensor at the place in question. Other data, such as the imaging ratio, are fed in via a keyboard disposed on the control panel 12. Data are displayed to the operator on a display also disposed on control panel 12. The basic exposure times $(F_o, T_{Bo}, T_{Ho})$ are determined in the computer 30 by means of data concerning the imaging ratio, lens, diaphragm, lamps, light-sensitivity of the film and basic screen range value of the screen. The data concerning the $OD_{min.}$ and $OD_{max.}$ of the original are automatically fed into the computer by means of a light meter 23. If a non-automatic light meter is used, the $OD_{min.}$ and $OD_{max.}$ values read off therefrom can be fed in via the keyboard on the front panel 12.

If the contrast range of an original, i.e. $OD_{max.} - OD_{min.}$, is less than the basic screen range of the screen (e.g. as in Fig. 2) a corresponding warning appears on the display. The computer 30 can make the "wanted basic screen range" equal to the contrast range of the original by means of a key. By means of the formulae 3 and 5 stored in memory 13 the computer then calculates the main exposure time and the additional exposure time for an imagewise additional exposure without a screen. The calculated times are automatically applied and displayed on the display.

If the operator wants a different "wanted basic screen range" for reasons indicated in the description of Fig. 2, this is fed in by means of an adjustable basic screen range regulator on control panel 12. The computer then calculates in accordance with formulae 3 and 5 again and, if necessary, by means of formula 2, the exposure times for the main exposure and the additional exposure or exposures.

The adjustable basic screen range regulator is constructed as a keyboard operating in conjunction with the computer. When new data are fed in in respect of the original, screen, camera or film, the basic screen range regulator returns to a standard condition.

The embodiment described has no limiting force in respect of the invention as claimed. For example, the adjustable basic screen range regulator may be in the form of a potentiometer coupled to an A/D converter and provided with a suitable graduated scale.

## Claims

1. A reproduction camera for the production of contact screen prints from an original, said camera being provided with a platen for a contact screen and a light-sensitive material, an optical system for projecting an image of the original in the plane of the light-sensitive material, means for exposing the light-sensitive material and means for controlling the exposure, said exposure controlling means comprising a computer which, after feeding in the minimum and maximum optical density of the original, the optical data of the screen used and the required data of the camera and the film, determines a dosage for an imagewise main exposure through the contact screen and at least one additional exposure, characterized in that in order to yield a screened print, of which a specific size of the highlight dots and a specific size of the shadow dots correspond exclusively or substantially exclusively to the minimum and maximum optical density of the original and to obtain a reproduction of an average grey value occurring in the original with any desired dot size, the computer is provided with an adjustable basic screen range regulator for varying the specific main exposure with simultaneous adaption of an imagewise additional exposure without the screen and, if the minimum and maximum optical density cannot or cannot exclusively be reproduced with the specific dot sizes by using the main exposure and the imagewise additional exposure, also of a non-imagewise additional exposure through the contact screen, in order exclusively or substantially exclusively to continue to reproduce the minimum and maximum optical density of the original with the specific dot sizes.

2. A reproduction camera as claimed in claim 1, characterized in that the adjustable basic screen range regulator returns to a standard condition by feeding in the data of the original, screen, camera or film.

## Patentansprüche

1. Reproduktionskamera zur Herstellung von Kontaktrasterabdrücken von einem Original, welche Kamera mit einer Platte für einen Kontaktraster und ein lichtempfindliches Material versehen ist, einem optischen System zur Projektierung eines Bildes des Originals in den Bereich des lichtempfindlichen Materials, Mitteln zum Exponieren des lichtempfindlichen Materials und Mitteln zum Kontrollieren der Exponierung,

## 0 095 201

welche Exponierungskontrollmittel einen Computer umfassen, der nach Erhalt der minimalen und maximalen optischen Dichte des Originals, der optischen Daten des verwendeten Rasters sowie der für die Kamera und den erforderlichen Daten eine Dosierung für eine bildmässige Hauptexponierung durch den Kontaktraster und zumindest eine extra Exponierung festsetzt, dadurch gekennzeichnet, dass der Computer zur Erzielung eines Rasterabdruckes, in welchem eine bestimmte Grösse der lichtstarken Punkte und der Schattenpunkte ganz oder annähernd ganz der minimalen und maximalen optischen Dichte des Originals entspricht, und zum Erhalt einer Reproduktion eines im Original aufscheinenden durchschnittlichen Grauwertes mit jeglicher gewünschten Punktgrösse mit einem einstellbaren Basiskontrastregulator versehen ist, zum Variieren der bestimmten Hauptexponierung unter gleichzeitigem Anpassen von zumindest einer der bildmässigen extra Exponierungen ohne den Raster, und im Falle dass die minimale und die maximale optische Dichte nicht oder nicht ausschliesslich mit den bestimmten Punktgrössen bei Verwendung der Hauptexponierung und der bildmässigen Extraexponierung reproduziert werden kann, auch durch eine nicht bildmässige Extraexponierung durch den Kontaktraster, um ausschliesslich oder im wesentlichen ausschliesslich mit der Reproduktion der minimalen und der maximalen optischen Dichte des Originals mit den bestimmten Punktgrössen fortzusetzten.

2. Reproduktionskamera nach Anspruch 1, dadurch gekennzeichnet, dass der einstellbare Basiskontrastregulator bei Füttern des Computers mit Daten über das Original, den Raster, die Kamera oder den Film in eine Standardstellung zurückkehrt.

**Revendications**

1. Caméra de reproduction pour la production par contact de copies de clichés tramés à partir d'un original, cette caméra comprenant une platine pour une trame de contact et pour un matériau photosensible, un système optique pour la projection d'une image de l'original dans le plan du matériau photosensible, des moyens pour l'exposition du matériau photosensible et des moyens de commande de l'exposition, ces moyens de commande de l'exposition comprenant un ordinateur qui, après avoir reçu la densité optique minimum et maximum, les données optiques de la trame utilisée et les données nécessaires de la caméra et la pellicule, détermine un dosage pour une exposition principale relative à l'image à travers la trame de contact et pour au moins une exposition supplémentaire, caractérisée en ce que l'ordinateur, pour produire une copie tramée dont une taille spécifique des points lumineux et une taille spécifique des points sombres correspondent exclusivement ou essentiellement exclusivement à la densité optique minimum et maximum de l'original et pour obtenir une reproduction d'une tonalité grise moyenne de l'original avec toutes tailles désirées de points, comprend un régulateur réglable de la gamme de base de la trame pour varier l'exposition principale spécifique avec une adaptation simultanée d'une exposition supplémentaire sans la trame et pour, si la densité optique minimum et maximum ne peut pas ou ne peut pas exclusivement être reproduite avec les tailles spécifiques de points en utilisant l'exposition principale et l'exposition supplémentaire, varier aussi une exposition supplémentaire non-relative à l'image à travers la trame de contact pour exclusivement ou essentiellement exclusivement continuer la reproduction de la densité optique minimum et maximum de l'original avec les tailles spécifiques de points.

2. Caméra de reproduction selon la revendication 1, caractérisée en ce que le régulateur réglable de la gamme de base de trame revient à une condition standard lors de l'alimentation en données sur l'original, la trame, la caméra ou la pellicule.

FIG. 1

FIG. 2

1

FÍG. 3

FÍG. 4